**Europäisches Patentamt**

**European Patent Office**

**Office européen des brevets**

(19)

(11) Publication number:

# 0 105 930
## A1

(12)

# EUROPEAN PATENT APPLICATION

published in accordance with Art. 158(3) EPC

(21) Application number: 82901161.8

(22) Date of filing: 22.04.82

Data of the international application taken as a basis:

(86) International application number:
**PCT/JP 82/00137**

(87) International publication number:
**WO 83/03929 (10.11.83 83/26)**

(51) Int. Cl.³: **H 02 P 5/34**

(43) Date of publication of application: **25.04.84**
**Bulletin 84/17**

(84) Designated Contracting States: **DE FR GB**

(71) Applicant: **FANUC LTD, 5-1, Asahigaoka 3-chome Hino-shi, Tokyo 191 (JP)**

(72) Inventor: **ISHIDA, Hiroshi, 2-2-73, Matsubara-cho Hamura-machi, Nishitama-gun Tokyo 190-11 (JP)**
Inventor: **FUJIOKA, Yoshiki,**
**Green-town 3-306,3-1293-10, Tateno, Higashiyamato-shi Tokyo 189 (JP)**
Inventor: **OTA, Naoto, 1953-19, Hino Hino-shi, Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **INDUCTION MOTOR DRIVING DEVICE.**

(57) An induction motor driving device for driving an induction motor (10) on the basis of current commands (iu, iv, iw) of three phases output by using the deviation (ER) between a speed command and the actual speed (n). This driving device has the means (31) for receiving the speed deviation (ER), the actual speed (n), for digitally processing sinusoidal signals ($I_u$, $I_v$) of the predetermined first and second phases of the U, V and W phases, and means (32) for producing the phase current (iw) of the third phase by using the first and second phase current (is, iv) so that the sum of the current commands of the U, V and W phases is zero.

EP 0 105 930 A1

0105930

## DESCRIPTION

INDUCTION MOTOR DRIVE APPARATUS

## Technical Field

This invention relates to an induction motor drive apparatus and, more particularly, to an induction motor drive apparatus which produces three-phase current commands through digital processing executed by use of a microcomputer.

## Background Art

Proposed methods of controlling induction motors include a so-called vector control method and field acceleration control method. With such methods of control, the primary current of an induction motor can be controlled in terms of the instantaneous magnitude thereof to enable fine control having comparatively good response.

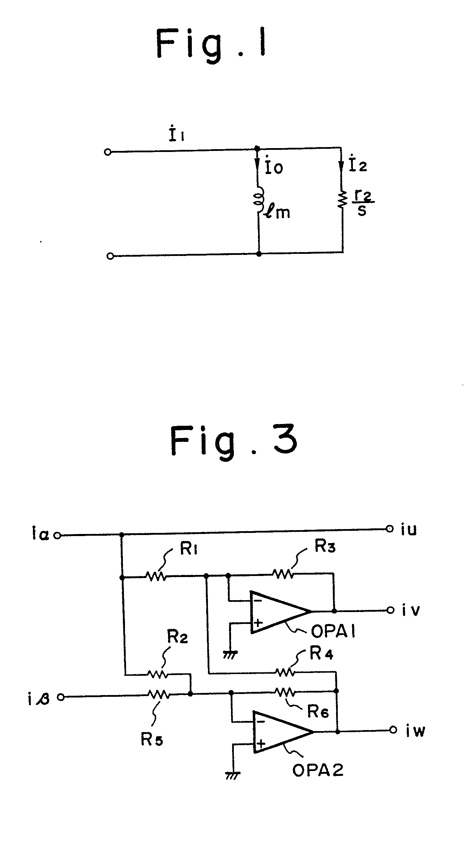

Fig. 1 shows an equivalent circuit of an induction motor and is useful for describing vector control. In Fig. 1, $l_m$ denotes excitation reactance, $r_2$ represents equivalent resistance, and s designates slip. If we consider the equivalent circuit of the induction motor in this fashion, the generated torque T will be expressed by:

$$T = 3 \frac{r_2 I_2}{s \cdot \omega_s} I_2 \quad \cdots \cdots \cdots \cdots \quad (1)$$

Note that $\omega_s$ represents the slip frequency. If we assume that $I_2$ is proportional to $s \cdot \omega_s$, then the torque T will be proportional to the secondary current and will have a torque generating mechanism similar to that of a DC motor. The following will hold from Fig. 1:

$$\omega_s \cdot \ell_m \cdot I_o = \frac{r_2}{s} \cdot I_2$$

$$\therefore s \cdot \omega_s = \frac{r_2 I_2}{\ell_m I_o} \quad \cdot \cdot \cdot \cdot \cdot \cdot \cdot \cdot \cdot \cdot \cdot \cdot \quad (2)$$

Accordingly, to make $I_2$ and $s \cdot \omega_s$ proportional to each other, the excitation current $I_o$ must be made a constant quantity.

Therefore, according to vector control, the excitation current $I_o$ is held constant and only the secondary current $I_2$ is varied, in proportion to the load torque, while perpendicularity between the excitation current $I_o$ and secondary current $I2$ is assured. Also, since an error (speed error) ER between a commanded speed and the actual speed may be regarded as a torque command, the primary current $I_1$ is defined so as to satisfy the following, in accordance with the speed error ER:

$$\dot{I}_1 = I_o + j \cdot k \cdot ER \quad \cdot \cdot \cdot \cdot \cdot \cdot \cdot \cdot \cdot \cdot \quad (3)$$

In the prior art, the primary current is generated in accordance with the following method.

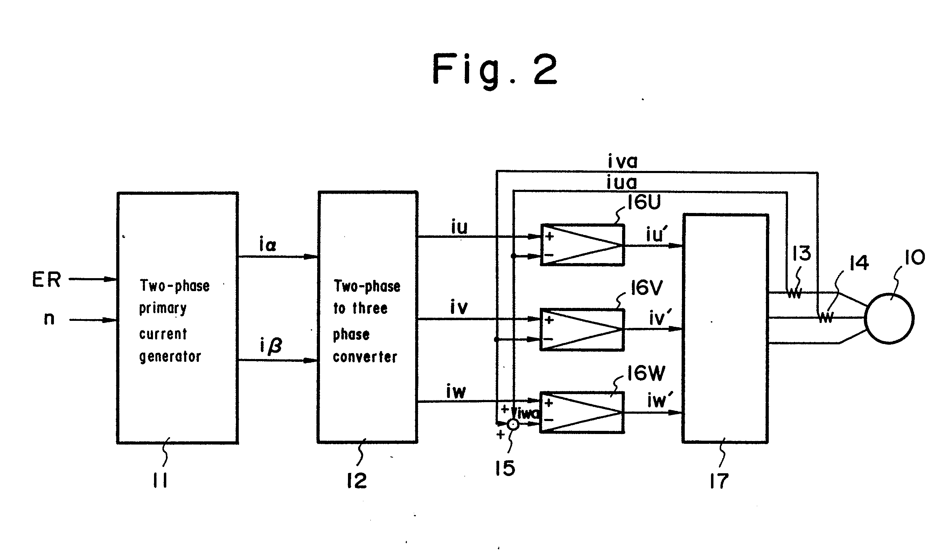

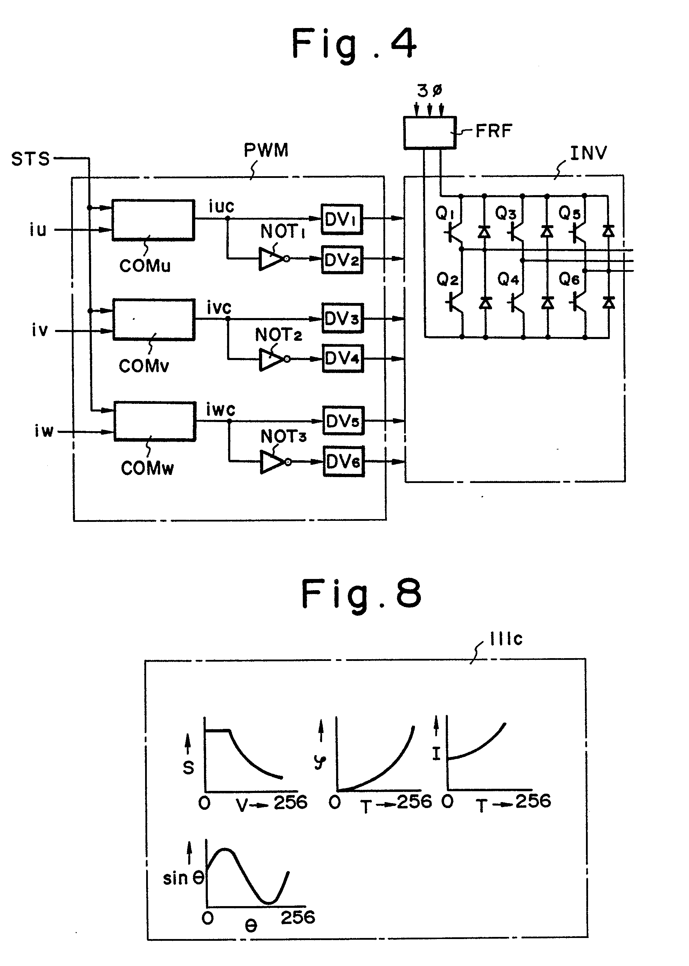

Specifically, the method includes generating mutually perpendicular, two-phase primary current commands $i\alpha$, $i\beta$ in accordance with the speed error ER and actual speed n, and converting these two-phase primary current commands $i\alpha$, $i\beta$ into three-phase commands through use of a two-phase to three-phase converter, whereby three-phase primary current commands $i_u$, $i_v$, $i_w$ are generated. Fig. 2 is an explantory view for explaining an example of the prior art, in which numeral 10 denotes an induction motor, 11 a two-phase primary current generator for generating current commands $i_\alpha$, $i_\beta$ of an amplitude and frequency which conform to the speed error ER and actual speed n, and 12 a two-phase to three-phase converter. As shown in Fig. 3, the two-phase to three-phase converter 12 is composed of resistors $R_1$ through $R_4$ each having a resistance of 20 KΩ., a resistor $R_5$ of 11.55 KΩ, a resistor R6 of 10 KΩ, and operational amplifiers $OPA_1$, $OPA_2$. In accordance with the resistance values set in this fashion, the two-phase to three-phase converter 12 performs the following vector operations to convert the mutually perpendicular two-phase currents into three-phase currents:

$$i_u = i_\alpha \quad \ldots \ldots \ldots \ldots \ldots \ldots (4)$$

$$i_v = -\frac{1}{2} i_\alpha + \frac{\sqrt{3}}{2} i_\beta \quad \ldots \ldots \ldots \ldots (5)$$

$$i_w = -\frac{1}{2} i_\alpha - \frac{\sqrt{3}}{2} i_\beta \quad \ldots \ldots \ldots \ldots (6)$$

Returning to Fig. 2, numerals 13, 14 denote current transformers for sensing phase currents $i_{ua}$, $i_{va}$ which flow in the U and V phases of the three-phase induction motor 10, respectively, and numeral 15 denotes an arithmetic circuit which performs the following addition operation for producing a phase current $i_{wa}$ to flow in the W phase of the induction

motor:

$$-(i_{ua} + i_{va}) \;---\!> i_{wa}$$

Numerals 16U, 16V, 16W designate current control circuits, provided for corresponding ones of the three phases, for computing and then amplifying current differences $(i_u - i_{ua})$, $(i_v - i_{va})$, $(i_w - i_{wa})$. Numeral 17 denotes a drive unit which includes a pulse-width modulator and an inverter comprising transistors. As shown in Fig. 4, the drive unit 17 includes a pulse-width modulator PWM comprising comparators $COM_u$, $COM_v$, $COM_w$, NOT gates $NOT_1$ through $NOT_3$, and drivers $DV_1$ through DV6, an inverter INV having six power transistors $Q_1$ through $Q_6$ and six diodes $D_1$ through $D_6$, and a three-phase full-wave rectifier FRF. The comparators $COM_u$, $COM_v$, $COM_w$ compare a sawtooth signal STS, generated by a sawtooth waveform generating circuit which is not shown, with the amplitudes of three-phase alternating current signals $i_u{}'$, $i_v{}'$, $i_w{}'$, respectively, and produce a "1" output when the magnitude of STS is exceeded by $i_u{}'$, $i_v{}'$ or $i_w{}'$, or a "0" output when the magnitude of STS is greater. Thus, the comparators produce the pulse-width modulated three-phase current commands $i_{uc}$, $i_{vc}$, $i_{wc}$ dependent upon the amplitudes of $i_u{}'$, $i_v{}'$, $i_w{}'$. The NOT gates $NOT_1$ through $NOT_3$ and drivers $DV_1$ through $DV_6$ convert these current commands $i_{uc}$, $i_{vc}$, $i_{wc}$ into drive signals $SQ_1$ through $SQ_6$ to control the on/off action of each of the power transistors $Q_1$ through $Q_6$ constituting the

inverter INV.

The foregoing conventional method has the following defects:

(1) a computation error is generated in effecting the conversion from the orthogonal two-phase system to the three-phase system;

(2) owing to the computation error, the relation $i_u + i_v + i_w = 0$ does not hold, giving rise to a periodic undulation dependent upon motor rotation; and

(3) a function generator for generating primary currents in two phases [$\sin\theta$ and $\sin(\theta + \pi)$] and a two-phase to three-phase converter, etc., are required, thereby complicating the circuitry and raising cost.

Another method of generating primary currents in three phases is to generate the following digitally in accordance with the speed error ER and actual speed n:

$$\sin (\omega_n t + \omega_s t + \varphi) \quad \ldots \ldots \ldots (7)$$
$$\sin (\omega_n t + \omega_s t + \varphi + 2\pi/3) \ldots \ldots (8)$$
$$\sin (\omega_n t + \omega_s t + \varphi + 4\pi/3) \ldots \ldots (9)$$

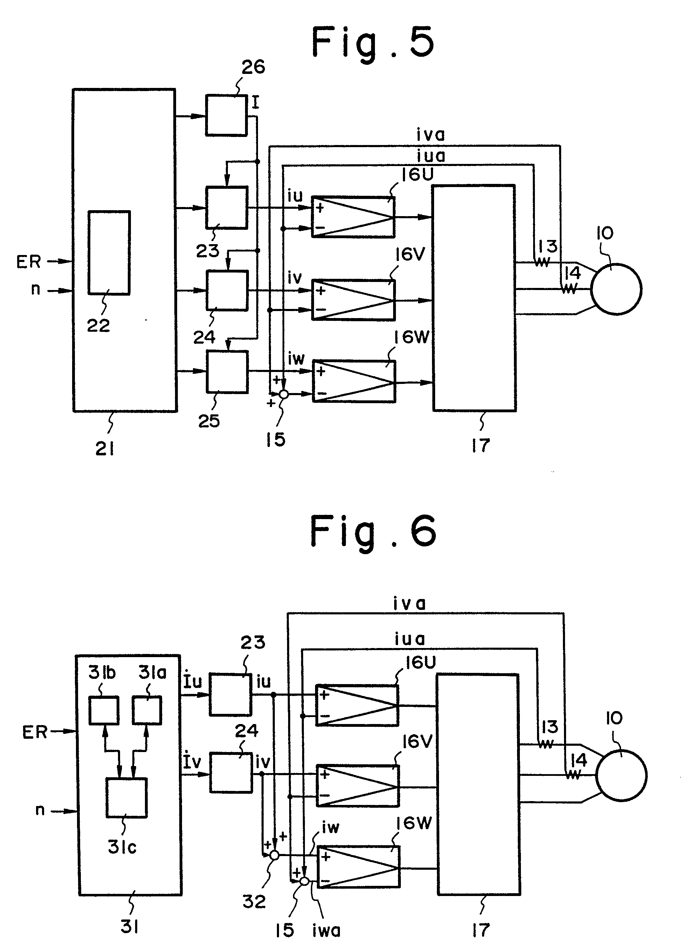

According to this method, a $\theta-\sin\theta$ characteristic, $\theta-\sin (\theta + 2\pi/3)$ characteristic and $\theta-\sin (\theta + 4\pi/3)$ characteristic are stored beforehand in the form of a table in a memory 22 located internally of a processor 21, shown in Fig. 5, $\theta = \omega_n \cdot t + \omega_s \cdot t + \varphi$ is computed (where $\omega_n$ represents angular frequency, which is proportional to the rotational speed of the induction motor, $\omega_s$ represents slip frequency, and $\underline{\varphi}$ represents phase difference), $\sin\theta$, $\sin (\theta + 2\pi/3)$ and $\sin (\theta +$

$4\pi/3$) are found using $\theta$, and these are applied as input signals to multiplying-type DA converters (sold under the nomenclature "DAC 08", manufactured by National Semiconductor Corporation) 23, 24, 25. Also stored previously in memory 22 is a relation (S-I characteristic) between $\underline{s}$ and the primary current amplitude. A digital primary current I, dependent upon the slip $\underline{s}$, is generated based on this relation and is applied to a DA converter 26 as an input signal. The output of the DA converter 26 is applied as an input to each of the multiplying-type DA converters 23, 24, 25 which then produce the following as respective output signals:

$$i_u = I \cdot \sin\theta, \quad i_v = I \cdot \sin(\theta + 2\pi/3), \quad i_w = I \cdot \sin(\theta + 4\pi/3)$$

In Fig. 5, portions similar to those shown in Fig. 2 are designated by like reference characters and a detailed description thereof is deleted.

The above method, however, possesses the following defects:

(1) the relation $i_u + i_v + i_w = 0$ is not produced with accuracy, resulting in a periodic undulation, and

(2) tables and DA converters are required for the three phases, thereby raising cost.

Accordingly, the object of the present invention is to provide an induction motor drive apparatus which enables the relation $i_u + i_v + i_w = 0$ to be established with accuracy, which eliminates periodic undulation and which is possessed of simple circuitry.

## Disclosure of the Invention

The present invention discloses an induction motor drive apparatus which produces three-phase current commands using a speed error between a speed command and an actual speed for driving an induction motor on the basis of the current commands. The induction motor drive apparatus includes means which receive the speed error and the actual speed as input signals for generating, through digital processing, prescribed sinusoidal signals in first and second phases from among the phases U, V and W, and means for generating a phase current in a third phase, using first and second phase currents, in such a manner that the sum of U-, V- and W-phase current commands attains a value of zero. Since the W-phase current command $i_w$ is decided so as to satisfy the relation $i_u + i_v + i_w = 0$, fluctuation and periodic undulation dependent upon motor rotation does not occur. A reduction in the number of circuit components also is achieved.

## Brief Description of the Drawings

Fig. 1 shows the equivalent circuit of an induction motor and is useful in describing vector control; Fig. 2 is a block diagram for describing a conventional system; Fig. 3 is a circuit diagram for a two-phase to three-phase converter; Fig. 4 is a block diagram of a drive unit; Fig. 5 is a block diagram for describing another conventional system; Fig. 6 is a block diagram for describing the present invention;

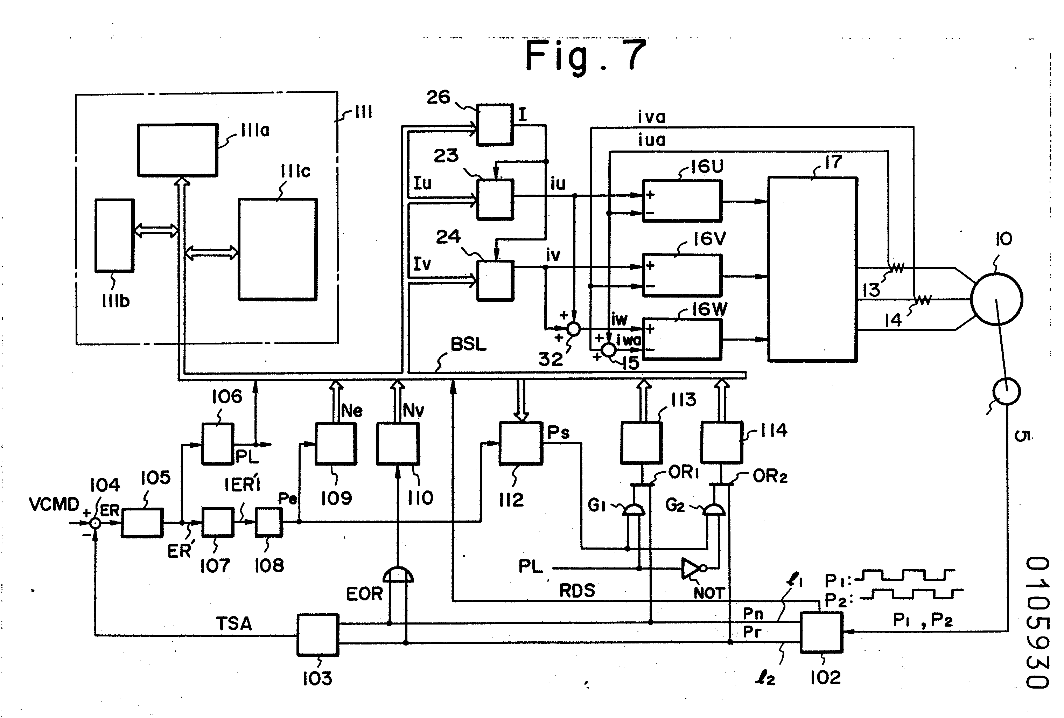

Fig. 7 is a block diagram showing another embodiment of the present invention; and Fig. 8 is an explanatory view for describing various characteristics stored in a data memory.

Best Mode for Carrying Out the Invention

An embodiment of the present invention will now be described in detail with reference to the drawings.

Fig. 6 is a view of an arrangement embodying the present invention. Numeral 31 denotes a current command generating unit, provided internally of a microcomputer, for generating two-phase current commands $I_U$, $I_V$ from among the U, V and W phases by means of digital processing. The current command generating unit 31 includes a data memory (ROM) 31a for storing various characteristics such as the $\theta$-sin$\theta$ characteristic in one phase and the S-I characteristic, a control program memory 31b, and a processor 31c, etc. Upon receiving a speed error ER and actual speed $\underline{n}$ as input signals thereto, the processor 31a, under the control of the control program, finds $\theta$, then proceeds to read sin$\theta$ and the primary current amplitude I out of the data memory 31a, and subsequently performs the following operations to produce $I_U$ and $I_V$:

$$I_U = I \cdot \sin\theta \quad \ldots \ldots \ldots \ldots \ldots (10)$$

$$I_V = I \sin(\theta + \frac{2\pi}{3}) \quad \ldots \ldots \ldots \ldots (11)$$

$I_U$ and $I_V$ are subjected to a DA conversion by DA converters 23, 24 to be converted into analog U- and V-phase current commands $i_u$, $i_v$. Next, an arithmetic

circuit 32 performs the addition:

$$-(i_u + i_v) \longrightarrow i_w \quad . \quad . \quad . \quad . \quad . \quad . \quad . \quad . \quad . \quad (12)$$

thereby producing a W-phase current command $i_w$.

Thenceforth, the three-phase current commands $i_u$, $i_v$, $i_w$ are compared with the actual phase currents $i_{ua}$, $i_{va}$, sensed by the respective current transformers 13, 14, and the output $i_{wa}$ of the arithmetic circuit 15, respectively, with the inverter of the drive unit 17 being driven in accordance with the differences detected. It should be noted that portions similar to those shown in Fig. 5 are designated by like reference characters. Also, the operations given by (10) and (11) may be performed using multiplying-type DA converters, as shown in conventional arrangement of Fig. 5.

Fig. 7 is a block diagram illustrating another embodiment of the present invention. Portions similar to those shown in Fig. 6 are designated by like reference characters.

In Fig. 7, numeral 10 denotes a three-phase induction motor and 101 a pulse generator for generating two pulse trains $P_1$, $P_2$, displaced in phase from each other by $\pi/2$ and having a frequency $f_v$ proportional to the rotational speed of the three-phase induction motor. Numeral 102 denotes a quadrupling circuit for differentiating the pulse trains $P_1$, $P_2$ to produce, on lines $\ell_1$, $\ell_2$, respectively, pulse trains $P_n$, $P_r$ of a quadrupled frequency $4 \cdot f_v$. The pulse train

$P_n$ is generated during forward rotation, and the pulse train $P_r$ during reverse rotation. The quadrupling circuit 102 discriminates the phase difference between the pulse trains $P_1$, $P_2$ to produce a rotational direction signal RDS. Numeral 103 denotes a frequency-to--voltage converter (referred to as an F/V converter hereinafter) which receives the pulse train $P_n$ or $P_r$ as an input for generating a voltage proportional to the frequency of the input pulse train, namely a voltage (referred to as actual speed TSA) proportional to the rotational speed. Numeral 104 designates an adding/substracting circuit for computing an error ER, namely slip $\underline{s}$, between a speed command VCMD and the actual speed TSA. Numeral 105 denotes a proportional integrating circuit for proportionally integrating the speed error ER in analog fashion for producing an error ER', 106 a polarity discriminating circuit for discriminating the polarity of the error ER', 107 an absolute value circuit, and 108 a voltage-to-frequency converter (referred to as a V/F converter) for producing a pulse train $P_e$ of a frequency proportional to the amplitude of the error ER'. Numerals 109, 110 designate programmable interval timers (referred to as PIT hereinafter). PIT 109 counts up the pulses in the pulse train $P_e$ generated by the V/F converter and is reset whenever its content is read by a processor which will be described later. The numeral value $N_e$ held in the PIT 109 corresponds to the torque T. That is, the torque T is expressed by:

$$T = K_O \frac{sE_2{}^2 r^2}{r_2{}^2 + (sx_2)^2} \quad \ldots \ldots \ldots \quad (13)$$

When $\underline{s}$ is small, T may be expressed thus:

$$T \doteqdot \frac{sE_2{}^2}{r^2}$$

The torque T therefore is approximately proportional to the slip $\underline{s}$ or, in other words, is approximately proportional to the error ER.

The PIT 110 is adapted to count up the pulse train $P_n$ or $P_r$, whichever enters via an exclusive-OR gate EOR, and is reset whenever its content is read by the processor. The content $N_v$ of PIT 110 conforms to the motor speed.

Numeral 111 denotes a microcomputer having a processor 111a, a control program memory 113b, and a data memory (ROM) 111c for storing various characteristics and data, described below. As shown in Fig. 8, the data memory 111c digitally stores, in the form of function tables, a torque-amplitude characteristic (T-I chacteristic), torque-phase difference characteristic (T-$\varphi$ characteristic), rotational speed-slip characteristic (V-S characteristic) and rotation angle-sine value characteristic (sine pattern). As for the T-$\varphi$ characteristic, the phase difference $\underline{\varphi}$ may be expressed as follows:

$$\varphi = \tan^{-1} \left(\frac{sx2}{r2}\right) \quad \ldots \ldots \ldots \quad (14)$$

(where $r_2$ is the resistance of the secondary winding in

one phase, $x_2$ is the reactance of the secondary winding in one phase when the induction motor is at rest, and $\underline{s}$ is the slip). Taking into account that $\underline{s}$ is small, we have the characteristic shown in Fig. 8. In the T-I characteristic, the primary current $I_1$ is expressed as follows:

$$I_1 = I_o + I_{1'}$$
$$= Io + \frac{1}{\measuredangle\beta} \frac{sE_2}{\sqrt{r_2{}^2+(sx_2)^2}} \ldots \ldots \quad (15)$$

(where $I_o$ is the excitation current, $I_{1'}$ is the primary load current, $\measuredangle$ is the turns ratio, $\beta$ is the phase conversion ratio, and $E_2$ is the secondary induced electromotive force). Considering that $\underline{s}$ is proportional to T when $\underline{s}$ is small, the characteristic is as shown in Fig. 8. As for the V-S characteristic (slip pattern), the slip is constant below a base speed, and is inversely proportional to the motor speed above the base speed. The control program memory 111b stores a control program which instructs the processor 111a to execute such operations as reading the torque T, speed V and rotation angle $\theta$, described below, and controlling the slip frequency on the basis of T, V, $\theta$ and the function tables, etc.

Numeral 112 denotes a programmable interval timer (PIT) for frequency-dividing the pulse train $P_e$ generated by the V/F converter 108. The processor 111a reads the content (motor speed) of the PIT 110 at a fixed period and, using the V-S characteristic (slip pattern), derives a numerical value which is in accordance with the motor speed and which is preset in the PIT 112. If we let the capacity of PIT 112 be M and let the preset value be $\underline{m}$, then the PIT 112 will deliver a single slip pulse $P_s$ each time (M-m)-number of pulses $P_e$ are generated, whereby the pulse train $P_e$ is frequency-divided by (M-m). This adjusts the frequency of the pulses $P_s$ to the rate at which the pulse train $P_n$ or $P_r$ is generated, the frequency of these pulse trains being proportional to the rotational speed. Numerals 113, 114 denote interval timers (PIT) capable of counting in one direction only (incapable of counting reversibly). PIT 113 counts up the forward rotation pulse train $P_n$ generated when the motor 10 is rotating in the forward direction, as well as the slip pulses $P_s$. PIT 114 counts up the reverse rotation pulse train $P_r$ generated when the motor 10 is rotating in the reverse direction, as well as the slip pulses $P_s$. Assume that 256 of the pulses $P_n$ or $P_r$ are generated for one revolution of the motor 10, and assume that the capacity of each of the PITs 113, 114 is 256. Then, subtracting the content $\theta_B$ of PIT 114 from the content $\theta_A$ of PIT 113 will give a value $\theta$ $(=\theta_A-\theta_B)$ indicative of the commanded angular orientation which takes into account the load angle attributed to slip. $G_1$, G2 denote AND gates, NOT denotes a NOT gate, and $OR_1$, $OR_2$ denote OR gates. When the error ER' is positive (polarity signal PL = "1"), AND gate $G_1$

opens to deliver the slip pulses $P_s$ solely to the PIT 113. When the error ER' is negative (polarity signal PL = "0"), AND gate $G_2$ opens to deliver the slip pulses $P_s$ solely to the PIT 114. Numerals 23, 24 designate multiplying-type digital/analog converters, and 26 denotes a DA converter. The DA converter 26 receives as an input the primary current amplitude (digital value) read using the T-I characteristic, and produces an output signal I which is the analog of this input. The respective inputs to the multiplying-type DA converters 23, 24 are the following three-phase sine waves (digital values) computed by the processor 111a:

$$I_U = \sin (\theta + \varphi) \quad \ldots \ldots \ldots (16)$$

$$I_V = \sin (\theta + \varphi + \frac{2\pi}{3}) \quad \ldots \ldots \ldots (17)$$

as well as the amplitude I from the DA converter 26. The DA converters 23, 24 generate the following analog sine waves $i_u$, $i_v$ of a predetermined amplitude:

$$i_u = I \cdot \sin\theta$$

$$i_v = I \cdot \sin (\theta + \frac{2\pi}{3})$$

The arithmetic circuit 32 performs the operation of Eq. (12) to produce $i_w$. It should be noted that the data memory 111c does not store the characteristics $\theta - \sin(\theta + \frac{2\pi}{3})$ and $\theta - \sin(\theta + \frac{4\pi}{3})$. Accordingly, the sine wave $\sin\theta$ in the first phase is obtained from the $\theta - \sin\theta$ characteristic, after which the sine wave $\sin\theta$ in the first phase is advanced or retarded in phase by $\frac{2\pi}{3}$ to generate the sine wave in the second phase.

The operation of the arrangement shown in Fig. 7 will now be described. When a speed command VCMD enters from speed command means, not shown, the three phase induction motor 10 attempts to rotate forwardly in accordance with the commanded speed VCMD. As the motor rotates, the pulse generator generates the first and second pulse trains $P_1$, $P_2$ which are displaced in phase by $\pi/2$ from each other and proportional to the rotational speed of the motor 10. The quadrupling circuit 102, upon discriminating which of the pulse trains $P_1$, $P_2$ leads the other, produces and sends the rotational direction signal RDC out on bus line BSL, sends the forward-rotation pulse train $P_n$ out on line $\ell_1$ during forward rotation of the motor, and sends the reverse rotation pulse train $P_r$ out on line $\ell_2$ during reverse rotation of the motor. Assume that the motor is rotating in the forward direction. In such case the forward-rotation pulse train $P_n$ will be applied to the F/V converter 103 and to the programmable interval timers 110, 113 where the pulses are counted up.

The F/V converter 103 produces an actual speed signal TSA of a voltage proportional to the motor speed. The adding/subtracting circuit 104 produces the error ER between the speed command VCMD and the actual speed TSA. The error ER is proportionally integrated by the proportional integrating circuit 105 for conversion into the error ER' which is applied to the polarity discriminating circuit 106 and absolute value circuit 107. The polarity discriminating circuit 106 discriminates the polarity of ER' and delivers a polarity signal PL on bus line BSL. The absolute value circuit 108 produces $|ER'|$, namely the absolute value of ER'. The absolute value $|ER'|$ is applied as an input signal to the V/F converter 108 which proceeds to produce the pulse train $P_e$ having a frequency proportional to $|ER'|$. The pulse train $P_e$ is counted up by the programmable interval timer (PIT) 109, the counted value $N_e$ being a numerical value which corresponds to the torque T, as mentioned above. The processor 111a read this value at a fixed period.

Meanwhile, the counted value $N_v$ in the program-mable interval timer 110 corresponds to the rotational speed of the motor and is read in the same manner as the content (torque T) of PIT 109 by means of the processor 111a, PIT 110 being reset whenever its content is read. Whenever the processor 111a reads the content (rotational speed) of PIT 110, the processor, under the control of the control program, obtains the numerical value $\underline{m}$, corresponding to the rotational speed, from the function table of the V-S characteristic (slip pattern), and presets the numerical value m in the PIT 112. The programmable interval timer (PIT) 112 receives also the pulse train $P_e$ delivered by the V/F converter 108 and frequency-divides this pulse train by (M-m), as described above, thereby converting it into the slip pulse train $P_s$. The pulses in the slip pulse train $P_s$ are counted up by the programmable interval timer 113, the pulse train passing through the OR gate $G_1$ (PL="1") and OR gate $OR_1$. Programmable interval timer (PIT) 113 counts the forward-rotation pulses $P_n$ in addition to the slip pulse train $P_s$, so that its content $\theta_A$ represents the total forward rotation angle. Similarly, the content $\theta_B$ of the programmable interval timer 114 represents the total reverse rotation angle.

Processor 111a reads $\theta_A$, $\theta_B$ at a fixed period and performs the operation $\theta = \theta_A - \theta_B$ each time it does so. The quantity $\theta$ is the current angular orientation of the motor.

Thenceforth, the processor 11a, under the control of the control program, obtains the three-phase sine waves $I_U$, $I_V$, expressed by Eqs. (16), (17), and the primary current amplitude I, using the T-$\varphi$ character-istic, the T-I characteristic and the sine pattern, which are stored in the data memory 111c, as well as the computed rotation angle $\theta$. The processor delivers $I_U$, $I_V$ and I to the multiplying-type DA converters 23, 24 and to the DA converter 26, respectively, whereby analog sine waves $i_u$, $i_v$ of a predetermined amplitude are produced. In consequence, the arithmetic circuit 32 may perform the operation of Eq. (12) to generate $i_w$. Thereafter, the three-phase current commands $i_u$, $i_v$, $i_w$ are compared with the actual phase currents $i_{ua}$, $i_{va}$ sensed by the current transformers 13, 14, and the output $i_{wa}$ of the arithmetic circuit 15, respectively,

-18- 0105930

and the inverter of the drive unit 17 is controlled in accordance with the error to supply the three-phase induction motor 10 with three-phase current of a predetermined frequency and amplitude.

Industrial Applicability

Thus, in accordance with the present invention, the circuitry is simplified and costs reduced because it suffices to provide a ROM for storing a table (the $\theta$-sin$\theta$ table) for function generation in one phase only, and the DA converters in two phases. Further, since the W-phase current command $i_w$ is decided so as to satisfy the relation $i_u + i_v + i_w = 0$, there is no fluctuation and periodic undulation in response to motor rotation, so that the invention is well-suited for application to three-phase induction motor drive.

What is claimed is:

1.    An induction motor drive apparatus which produces three-phase current commands using a speed error between a speed command and an actual speed for driving an induction motor on the basis of said current commands, characterized by including sinusoidal signal generating means which receive a signal, in accordance with said speed·error, and the actual speed as input signals thereto for generating, through digital processing, prescribed sinusoidal signals in first and second phases from among phases U, V and W, and means for generating a phase current in a third phase, using phase currents in said first and second phases, in such a manner that the sum of U-, V- and W-phase current commands attains a value of zero.

2.    An induction motor drive apparatus according to claim 1, characterized in that said sinusoidal signal generating means includes a memory for storing a relation between an angle $\theta$ and sin $\theta$ ($\theta$-sin$\theta$ characteristic), and an arithmetic unit for obtaining, from said characteristic, a sine wave sin $\theta$ in the first phase, and for then advancing or delaying the phase of said sine wave in the first phase by $2\pi/3$ to generate a sine wave in the second phase or third phase.

# Fig.1

# Fig.3

# Fig. 2

ER ──►
n ──►

| Two-phase primary current generator | $i\alpha$ ──► $i\beta$ ──► | Two-phase to three phase converter |

iu, iv, iw

16U, 16V, 16W

iu′, iv′, iw′

iva, iua, Viwa

13, 14, 10

15, 17, 11, 12

2

0105930

# Fig. 4

# Fig. 8

# Fig.5

# Fig.6

Fig. 7

# INTERNATIONAL SEARCH REPORT

0105930

International Application No. PCT/JP 82/00137

## I. CLASSIFICATION OF SUBJECT MATTER (if several classification symbols apply, indicate all) [3]

According to International Patent Classification (IPC) or to both National Classification and IPC

Int. Cl[3]    H02P  5/34

## II. FIELDS SEARCHED

| Minimum Documentation Searched [4] | |
|---|---|
| Classification System | Classification Symbols |
| IPC | H02P  5/28, H02P  5/34,  H02P  5/40,  H02P  7/62 |

| | Documentation Searched other than Minimum Documentation to the Extent that such Documents are Included in the Fields Searched [5] |
|---|---|
| | Kokai Jitsuyo Shinan Koho          1971-1982 <br> Jitsuyo Shinan Koho          1960-1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | Showa 54-nen Denki Gakkai Zenkoku Taikai-ron Bunshu, April, 1979, S.8-4, Otsuka. Kurosawa, "Yudoki no Sokudo Seigyo" | 1, 2 |

\* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use. exhibition or other means

"P" . document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search [2] | Date of Mailing of this International Search Report [2] |
|---|---|
| July 16, 1982 (16.7.82) | July 26, 1982 (26.07.82) |
| International Searching Authority [1] | Signature of Authorized Officer [20] |
| Japanese Patent Office | |

Form PCT/ISA/210 (second sheet) (October 1981)